# EUROPÄISCHE PATENTANMELDUNG

(11) **EP 3 566 897 A1**
(43) Veröffentlichungstag der Anmeldung: **13.11.2019**
(21) Anmeldenummer: 19164809.6
(22) Anmeldetag: 25.03.2019
(51) Int. Cl.: B60L 53/14, B60L 58/19, B60L 53/10

(54) **ENERGIESYSTEM FÜR EIN KRAFTFAHRZEUG UND VERFAHREN ZUM LADEN EINES ELEKTRISCHEN ENERGIESPEICHERS**

(30) Priorität: 07.05.2018 DE 102018207008
(71) Anmelder: Audi AG, 85045 Ingolstadt (DE)
(72) Erfinder: Straßer, Roman, 85080 Gaimersheim (DE)

(57) **Zusammenfassung**

Die Erfindung betrifft ein Energiesystem für ein Kraftfahrzeug und ein Verfahren zum Laden mindestens eines elektrischen Energiespeichers des Energiesystems.

## Beschreibung

Die Erfindung betrifft ein Energiesystem für ein Kraftfahrzeug und ein Verfahren zum Laden mindestens eines elektrischen Energiespeichers des Energiesystems.

Elektrofahrzeuge oder Hybridfahrzeuge verfügen jeweils über mindestens einen elektrischen Energiespeicher, der als Traktionsbatterie dient und elektrische Energie speichert, die eine elektrische Maschine des Kraftfahrzeugs in Antriebsleistung umsetzt. Um die Reichweite des Fahrzeugs zu maximieren, ist eine möglichst große Ladekapazität des elektrischen Energiespeichers erwünscht.

Um den elektrischen Energiespeicher zu laden, verfügt ein solches Kraftfahrzeug über mindestens eine elektrische Ladeschnittstelle, d. h. mindestens einen elektrischen Anschluss. Über eine solche Ladeschnittstelle kann das Kraftfahrzeug an eine stationäre, elektrische Ladestation gekoppelt werden, um den Energiespeicher des Kraftfahrzeugs aufzuladen.

Aus der Praxis bekannte Elektrofahrzeuge sowie Hybridfahrzeuge verfügen über eine als Ladebuchse ausgebildete elektrische Ladeschnittstelle, um das Kraftfahrzeug zum Laden des elektrischen Energiespeichers über ein Ladekabel an eine stationäre, elektrische Ladestation zu koppeln. Die Energiespeichereinheit des ladebereit abgestellten Kraftfahrzeugs wird zum Laden mittels eines Ladekabels mit der externen Energiequelle verbunden.

Jedoch sind Ladevorgänge der Energiespeichereinheit regelmäßig zeitintensiv. Eine wesentliche Verkürzung der Ladedauer ist nicht möglich, da die zum Laden der Energiespeichereinheit vorgesehenen externen Energiequellen insbesondere bezüglich des Ladestroms begrenzt sind.

Die Erfindung hat sich die Aufgabe gestellt, ein Verfahren zum Laden eines elektrischen Energiespeichers eines Kraftfahrzeugs zur Verfügung zu stellen, und eine Steuerungseinrichtung zur Durchführung des Verfahrens sowie ein Energiesystem für ein Kraftfahrzeug zu schaffen, mit deren Hilfe der Ladevorgang verkürzt werden kann.

Aus der DE 10 2015 004 119 A1 geht ein Kraftfahrzeug mit einem elektrischen Energiespeicher und zwei fahrzeugseitigen Ladeschnittstellen hervor. Beide Ladeschnittstellen sind einheitlich ausgestaltet und zum parallelen Laden des elektrischen Energiespeichers mit jeweils einer externen Ladevorrichtung koppelbar.

Die DE 10 2013 102 576 A1 offenbart eine Steuerungseinrichtung und ein Verfahren zum Laden eines elektrischen Energiespeichers eines Kraftfahrzeugs. Dabei wird der elektrische Energiespeicher gleichzeitig über mindestens zwei elektrische Ladeschnittstellen und damit gleichzeitig über mindestens zwei elektrische Anschlüsse aufgeladen. Dazu werden eine Ladestation mit mindestens zwei elektrischen Anschlüssen oder zwei Ladestationen mit jeweils einem elektrischen Anschluss verwendet.

Die DE 10 2011 010 227 A1 offenbart ein Kraftfahrzeug mit einer Energiespeichereinheit für elektrische Energie. Die Energiespeichereinheit ist in einzelne Blöcke unterteilbar, wobei jedem der einzelnen Blöcke ein Ladeanschlusselement zugeordnet ist, so dass die Blöcke separat und simultan durch eine externe Energiequelle geladen werden können.

Die Aufgabe wird erfindungsgemäß gelöst durch ein Verfahren mit den Merkmalen des Anspruchs 1, sowie ein Energiesystem mit den Merkmalen des Anspruchs 7. Ausgestaltungen und Weiterbildungen der Erfindung ergeben sich aus den abhängigen Ansprüchen.

Gegenstand der Erfindung ist ein Verfahren zum Laden mindestens eines elektrischen Energiespeichers eines Kraftfahrzeugs, worin der Energiespeicher für die Dauer des Ladevorgangs in mindestens zwei gleiche Teilenergiespeicher aufgeteilt und diese in Reihe geschaltet werden.

In einer Ausführungsform des Verfahrens umfasst der mindestens eine elektrische Energiespeicher eine Anzahl von Zellen oder Zellmodulen, die in wenigstens zwei, jeweils mindestens eine elektrische Zelle oder ein Zellmodul umfassende Teilenergiespeicher unterteilbar oder unterteilt ist, und worin die Teilenergiespeicher wahlweise parallel oder in Reihe geschaltet werden können.

Erfindungsgemäß wird der elektrische Energiespeicher eines Kraftfahrzeugs für einen Ladevorgang in mindestens zwei gleiche Teilenergiespeicher (Blöcke) aufgeteilt, die in Reihe geschaltet werden. Dadurch ergibt sich eine Vervielfachung der Ausgangsspannung des elektrischen Energiespeichers und damit der maximal anwendbaren Ladespannung. Dadurch wird ein besonders schneller Ladevorgang für den elektrischen Energiespeicher des Kraftfahrzeugs möglich.

Erfindungsgemäß wird die Energiespeichereinheit in mindestens zwei einzelne Blöcke unterteilt, respektive werden die der Energiespeichereinheit zugehörigen elektrischen Zellen oder Zellmodule zu mindestens zwei Blöcken gruppiert, die jeweils mindestens eine elektrische Zelle oder ein Zellmodul umfassen. In einer Ausführungsform des Verfahrens wird die Energiespeichereinheit in zwei gleiche Blöcke unterteilt. In einer anderen Ausführungsform des Verfahrens wird die Energiespeichereinheit in drei gleiche Blöcke unterteilt. In wieder einer anderen Ausführungsform des Verfahrens wird die Energiespeichereinheit in vier gleiche Blöcke unterteilt. Im Fahrbetrieb des Kraftfahrzeugs ist die Unterteilung aufgehoben, d. h. die Blöcke sind parallelgeschaltet. In einer Ausführungsform des Verfahrens wird der mindestens eine elektrische Energiespeicher in n gleiche Teilenergiespeicher aufgeteilt, wobei n eine ganze Zahl größer 2 ist.

Die Blöcke sind gleich groß. Grundsätzlich sind abhängig von der Anzahl der der Energiespeichereinheit zugehörigen elektrischen Zellen oder Zellmodule verschiedene Unterteilungen der elektrischen Zellen oder Zellmodule möglich. Beispielsweise kann für eine 60 elektrische Zellen umfassende Energiespeichereinheit bei einer Gruppierung in zwei Blöcke jeder Block 30 Zellen umfassen, bei einer Unterteilung in drei Blöcke jeder Block 20 Zellen umfassen, und bei einer Unterteilung in vier Blöcke jeder Block 15 Zellen umfassen.

Für die Dauer des Ladevorgangs werden die Blöcke in Reihe geschaltet. Eine Ladezeitverkürzung ergibt sich sonach im Wesentlichen daraus, dass für den Ladevorgang eine wesentlich höhere Ladespannung eingesetzt werden kann, wenn die Blöcke in Reihe geschaltet sind, als wenn sie parallelgeschaltet sind. Bei einer Unterteilung des Energiespeichers in n gleiche, in Serie geschaltete Teilenergiespeicher kann die Ladespannung das n-fache der Ladespannung eines einzelnen Teilenergiespeichers betragen. Bei einem vorgegebenen maximalen Ladestrom ergibt sich dadurch auch die n-fache Ladeleistung.

In einer Ausführungsform des Verfahrens wird der mindestens eine Energiespeicher in Abhängigkeit von einer für den Ladevorgang zur Verfügung stehenden Ladespannung in Teilenergiespeicher aufgeteilt. In einer speziellen Ausführungsform ist die Summe der Nennspannungen der Teilenergiespeicher kleiner oder gleich der zur Verfügung stehenden Ladespannung.

Selbstverständlich ergibt sich im Betrieb des Kraftfahrzeugs durch die Unterteilung des Energiespeichers in Blöcke kein Nachteil für die Leistungsfähigkeit der Energiespeichereinheit, da die Unterteilung in Blöcke vornehmlich im Rahmen von Ladevorgängen der Energiespeichereinheit stattfindet und danach wieder aufgehoben wird.

Es ist möglich, den Energiespeicher bereits ab Werk in entsprechende Blöcke zu unterteilen. In einer Ausführungsform weist der elektrische Energiespeicher des Kraftfahrzeugs zwei Teilenergiespeicher auf. Die Teilenergiespeicher sind über Schalteinrichtungen zu einer Parallelschaltung elektrisch verbindbar oder zu einer Serienschaltung elektrisch verbindbar. Dazu kann eine Steuereinrichtung die Schalteinrichtungen ansteuern. Im Fahrbetrieb des Kraftfahrzeugs sind die elektrischen Teilenergiespeicher über die Schalteinrichtungen parallelgeschaltet. Während des Ladebetriebs werden die Teilenergiespeicher über die Schalteinrichtung zu einer Serienschaltung verbunden. Bei zwei jeweils als Batterien mit 400 V Nennspannung ausgestalteten Teilenergiespeichern ergibt sich in der Serienschaltung ein Energiespeicher mit 800 V Nennspannung. Nach Beendigung des Ladevorgangs werden die Teilenergiespeicher über die Schalteinrichtungen wieder parallelgeschaltet.

Eine weitere Ausführungsform der Erfindung sieht vor, dass der elektrische Energiespeicher einen ersten Teilenergiespeicher und einen zweiten Teilenergiespeicher aufweist, die im Kraftfahrzeug galvanisch voneinander getrennt und Teil eines sogenannten Mehr-Maschinen-Konzepts sind. So kann beispielsweise der erste Teilenergiespeicher zum Antrieb einer Vorderachse des Kraftfahrzeugs und der zweite Teilenergiespeicher zum Antrieb einer Hinterachse des Kraftfahrzeugs genutzt werden. Die beiden Teilenergiespeicher werden zum Laden des Energiespeichers in Reihe geschaltet und nach dem Ende des Ladevorgangs wieder galvanisch voneinander getrennt. Die beiden Teilenergiespeicher können beispielsweise als Niedervoltbatterien ausgestaltet sein. Durch Schließen der Schalteinrichtung können die beiden Niedervoltbatterien zum Laden in Reihe geschaltet werden, wobei der elektrische Energiespeicher in vorteilhafter Weise dann als eine Hochvoltbatterie ausgestaltet ist. Unter einer Hochvoltbatterie wird hier eine Batterie verstanden, welche eine Spannung zwischen 700 V und 900 V, insbesondere 800 V, bereitstellt. Unter einer Niedervoltbatterie wird hier eine Batterie verstanden, welche eine Spannung zwischen 350 V und 450 V, insbesondere 400 V, bereitstellt.

Durch die Reihenschaltung der beiden Teilenergiespeicher während des Ladevorgangs, also durch die temporäre Verdoppelung der Nennspannung des Energiespeichers, kann von der Ladevorrichtung bei vorgegebenem Ladestrom eine doppelt so hohe Ladeleistung abgerufen werden wie bei der Parallelschaltung der Teilenergiespeicher.

In einer anderen Ausführungsform des Verfahrens ist eine dynamische Unterteilung des Energiespeichers vorgesehen, wobei die Unterteilung des Energiespeichers in Abhängigkeit von den Leistungscharakteristika der beim Ladevorgang eingesetzten externen Energiequelle, z. B. der zur Verfügung stehenden maximalen Ladespannung bzw. des maximalen Ladestroms, erfolgt.

Der elektrische Energiespeicher wird zum Aufladen über eine Ladeschnittstelle mit einer externen Energiequelle, beispielsweise einer Ladesäule oder einer Ladestation verbunden, welche eine Ladespannung liefern kann, die dem Produkt aus der Anzahl der Teilenergiespeicher im elektrischen Energiespeicher und der Nennspannung der einzelnen Teilenergiespeicher entspricht.

Die Erfindung ist insbesondere dann von Vorteil, wenn der zu ladende elektrische Energiespeicher ein Spannungsniveau aufweist, welches maximal der halben maximalen Ladespannung der jeweiligen externen Energiequelle (Ladestation) entspricht. So kann beispielsweise der zu ladende elektrische Energiespeicher ein Spannungsniveau von etwa 400 V aufweisen und die Ladestation ein Spannungsniveau von etwa 800 V. Mit der Erfindung kann die zum Laden eines elektrischen Energiespeichers benötigte Zeit verkürzt werden.

In einer Ausführungsform des Verfahrens umfasst der mindestens eine elektrische Energiespeicher mindestens eine Traktionsbatterie eines Elektrofahrzeugs oder eines Hybridfahrzeugs.

Gegenstand der Erfindung ist auch ein Energiesystem für ein Kraftfahrzeug, das mindestens einen elektrischen Energiespeicher umfasst, der dafür eingerichtet ist, reversibel in mindestens zwei in Reihe geschaltete gleiche Teilenergiespeicher aufgeteilt zu werden; und eine mit dem Energiespeicher verbundene Ladeschnittstelle zum Aufladen des mindestens einen elektrischen Energiespeichers mittels einer elektrische Energie bereitstellenden externen Energiequelle.

Das Energiesystem weist wenigstens einen, eine Anzahl elektrischer Zellen oder Zellmodule umfassenden Energiespeicher für elektrische Energie auf. Der Energiespeicher kann zum Aufladen über eine Ladeschnittstelle mit einer elektrische Energie bereitstellenden externen Energiequelle verbunden werden, z. B. mittels eines Ladekabels, wenn das Kraftfahrzeug sich in einem ladebereiten Zustand befindet.

Die Ladeschnittstelle kann eine Ladeschnittstelle sein, an welche über ein entsprechendes Ladekabel eine Gleichspannungsladestation ankoppelbar ist; oder eine Ladeschnittstelle, bei welcher über ein Ladekabel eine Wechselspannungsladestation anschließbar ist. Bei der Ladeschnittstelle kann es sich um eine Ladebuchse handeln, über die über das Ladekabel eine Drehspannungsladestation ankoppelbar ist.

In einer speziellen Ausführungsform ist die Ladeschnittstelle an eine Induktionsladestation ankoppelbar: Die Induktionsladestation erzeugt ein magnetisches Feld, über welches das Kraftfahrzeug berührungslos über die Ladeschnittstelle an die Ladestation gekoppelt werden kann, um so den elektrischen Energiespeicher zu laden.

Die zum Laden des Energiespeichers genutzten Ladestationen können unterschiedliche Spannungsarten, zum Beispiel Wechselspannung und Gleichspannung, und/oder unterschiedliche maximale Ladespannungen und/oder unterschiedliche maximale Ladeströme aufweisen. Ferner können kabelgebundene Ladestationen oder Ladestationen mit berührungslosen Ladeschnittstellen eingesetzt werden.

In einer Ausführungsform des Energiesystems ist dem mindestens einen elektrischen Energiespeicher eine Steuereinrichtung zugeordnet, die zur Unterteilung des mindestens einen elektrischen Energiespeichers in Teilenergiespeicher, d. h. zur Unterteilung der Anzahl elektrischer Zellen oder Zellmodule des Energiespeichers in Blöcke und zur wahlweise parallelen oder seriellen Verschaltung der Teilenergiespeicher (Blöcke) eingerichtet ist.

Die Steuereinrichtung kann in Abhängigkeit verschiedener Parameter oder anhand eines vorgegebenen oder, gegebenenfalls von einem Bediener, vorgebbaren Schemas die Unterteilung der Energiespeichereinheit in einzelne Blöcke vornehmen. Gleichermaßen kann die Steuereinrichtung auch zur Steuerung elektrischer Schaltvorrichtungen ausgebildet sein, die dafür eingerichtet sind, mindestens zwei Blöcke des Energiespeichers parallel oder in Reihe zu schalten. Wie bereits erwähnt, steuert bzw. regelt die Steuerungseinrichtung das Laden des elektrischen Energiespeichers.

In einer Ausführungsform ist die Steuereinrichtung dazu eingerichtet, die dem Energiespeicher elektrischen Zellen oder Zellmodule dynamisch in einzelne Blöcke zu unterteilen, respektive die elektrischen Zellen oder Zellmodule beliebig zu einzelnen Blöcken zusammenzufassen. Hierzu ist die Steuereinrichtung zur Steuerung von, insbesondere elektrischen, Kontakten bzw. Schaltmitteln eingerichtet, über welche die elektrischen Zellen oder Zellmodule des Energiespeichers beliebig zu Blöcken zusammenschaltbar sind. Gleichfalls ist es über eine Ansteuerung der Kontakte bzw. der Schaltmittel möglich, bestehende Blöcke beliebig aufzulösen bzw. neu zu bilden.

In einer Ausführungsform des Energiesystems ist die Steuervorrichtung mit einer Kommunikationseinrichtung verbunden, die dafür eingerichtet ist, mit einer externen Energiequelle zu kommunizieren und einen Ladevorgang zu koordinieren. Dabei kann sie der externen Energiequelle beispielsweise einen Wert für eine Ladespannung vorgeben. Um den Ladevorgang zu koordinieren, kommuniziert die Kommunikationseinrichtung mit der externen Energiequelle und der Steuervorrichtung des elektrischen Energiespeichers. Dadurch kann ein zuverlässiges Aufladen des elektrischen Energiespeichers gewährleistet werden.

In einer Ausführungsform weist das Energiesystem eine mit der Steuereinrichtung kommunizierende Erfassungseinrichtung auf, die zur Erfassung einer Verbindung der Ladeschnittstelle mit einer externen Energiequelle und gegebenenfalls zur Erfassung der Netzkapazität der externen Energiequelle eingerichtet ist.

Es ist zweckmäßig, wenn das Energiesystem eine mit der Steuereinrichtung kommunizierende Erfassungseinrichtung zur Erfassung einer Verbindung der Ladeschnittstelle mit einer externen Energiequelle, z. B. einer Ladestation, aufweist, wobei die Steuereinrichtung dazu eingerichtet ist, in Abhängigkeit des von der Erfassungseinrichtung gelieferten Erfassungsergebnisses eine Unterteilung des Energiespeichers in Blöcke vorzunehmen. Erfasst die Erfassungseinrichtung eine mit der Ladeschnittstelle verbundene externe Energiequelle, z. B. eine Ladesäule, so führt die Steuereinrichtung eine Unterteilung des Energiespeichers in Blöcke durch.

In einer Ausführungsform ist vorgesehen, dass die Erfassungseinrichtung bei erfasster Verbindung einer externen Energiequelle mit der Ladeschnittstelle zur Erfassung der Netzkapazität der externen Energiequelle eingerichtet ist, und die Steuereinrichtung dafür eingerichtet ist, in Abhängigkeit des von der Erfassungseinrichtung gelieferten Erfassungsergebnisses eine Unterteilung des Energiespeichers in Blöcke durchzuführen. Entsprechend ist über die Steuereinrichtung eine der jeweiligen externen Energiequelle individuell angepasste Unterteilung des Energiespeichers in Blöcke bzw. Gruppierung der elektrischen Zellen oder Zellmodule möglich, so dass eine optimale Ladestrategie des Energiespeichers erstellt und ausgeführt werden kann. Die Netzkapazität kann über entsprechende, mit der Erfassungseinrichtung kommunizierende Sensoren erfasst werden.

Ist die erfasste Ladespannung der externen Energiequelle beispielsweise doppelt so hoch wie die Nennspannung des Energiespeichers, unterteilt die Steuereinrichtung den Energiespeicher in zwei gleich große Blöcke. Entsprechendes gilt, wenn die Ladespannung das Dreifache bzw. Vierfache der Nennspannung des Energiespeichers beträgt, das heißt, der Energiespeicher wird dynamisch unter Berücksichtigung der von der angeschlossenen externen Energiequelle bereitstellbaren Ladespannung unterteilt.

In Weiterbildung der Erfindung kann die mit der Steuereinrichtung kommunizierende Erfassungseinrichtung zur Erfassung des Ladezustands des Energiespeichers und/oder der jeweiligen Blöcke und/oder der elektrischen Zellen bzw. Zellmodule und zur Ausgabe wenigstens einer den jeweiligen Ladezustand betreffenden Information ausgebildet sein. Entsprechend ist ein Bediener stets über den aktuellen Ladezustand des Energiespeichers bzw. der jeweiligen Blöcke und/oder der elektrischen Zellen bzw. Zellmodule informiert. Das Informationssignal kann zudem Angaben über die zu erwartende Ladedauer bzw. Laderestdauer oder durch den Ladevorgang in etwa entstehende Kosten beinhalten, mithin also Angaben, die vor oder während des Ladens des Energiespeichers für einen Bediener von Interesse sein können.

Es ist überdies vorteilhaft, wenn die Erfassungseinrichtung auch zur Erfassung der Funktionsfähigkeit des Energiespeichers und/oder der mit dem Energiespeicher verbundenen Ladeschnittstelle und gegebenenfalls eines Ladekabels und in Abhängigkeit des Erfassungsergebnisses zur Ausgabe eines Informationssignals an einen Bediener ausgebildet ist. So ist es möglich, einem Bediener eine Information zu geben, ob ein Ladevorgang grundsätzlich möglich ist, also eine Information über die Betriebsfähigkeit bzw. Betriebsbereitschaft sämtlicher unmittelbar oder mittelbar vom Ladevorgang betroffenen Komponenten, insbesondere elektrische Kontakte, elektrische Verbindungen zwischen der externen Energiequelle und dem Energiespeicher und/oder elektrische Verbindungen zwischen dem Energiespeicher und den von diesem mit elektrischer Energie gespeisten Komponenten des Kraftfahrzeugs.

Bevorzugt wird die Prüfung der Funktionsfähigkeit und die Ausgabe des Informationssignals nach ladebereitem Abstellen des Kraftfahrzeugs automatisch durchgeführt. Die Prüfung der Funktionsfähigkeit kann sich zusätzlich ein oder mehrmals während des Ladevorgangs wiederholen.

Es ist zweckmäßig, wenn das Informationssignal über wenigstens ein kraftfahrzeugseitiges Ausgabemittel ausgebbar ist. Kraftfahrzeugseitig installierte Ausgabemittel können z. B. Ausgabemittel im Bereich der Ladeanschlusselemente sein, z. B. optische Anzeigemittel, wie Leuchtdioden, oder auch im Innenraum des Kraftfahrzeugs installierte Ausgabemittel, wie Displays oder Lautsprecher. In einer alternativen Ausführungsform wird das Informationssignal funksignalartig über eine Funkverbindung zwischen einer kraftfahrzeugseitigen Sendeeinrichtung und einer bedienerseitigen Empfangseinrichtung an einen Bediener übertragen, das Informationssignal wird also nicht am Kraftfahrzeug selbst ausgegeben, sondern von diesem über eine Sendeeinrichtung an eine bedienerseitige Empfangseinrichtung übertragen. Die bedienerseitige Empfangseinrichtung kann etwa Teil einer bedienerseitigen, insbesondere mobilen Sende- und Empfangseinrichtung, wie z. B. eines Mobiltelefons oder eines sogenannten Smartphones, sein. Das zu übertragende Informationssignal kann akustischer und/oder optischer Natur sein. Auch eine haptische Ausgabe, wie etwa über Vibrationen, ist denkbar. Selbstverständlich ist es auch möglich, das Informationssignal sowohl kraftfahrzeugseitig auszugeben als auch an eine bedienerseitige Empfangseinrichtung zu übertragen.

Der Energiespeicher ist bevorzugt dem Antriebsaggregat des Kraftfahrzeugs, insbesondere einem als Antriebsaggregat ausgebildeten Elektromotor, zugeordnet. Insofern ist das Kraftfahrzeug bevorzugt als wenigstens teilweise elektrisch betriebenes Kraftfahrzeug aufzufassen, das heißt als ein Hybridfahrzeug oder ein reines Elektrofahrzeug, z. B. ein batterieelektrisches Fahrzeug (BEV) oder ein Brennstoffzellenfahrzeug. Der Energiespeicher kann in Ausnahmen auch anderen Komponenten des Kraftfahrzeugs zugeordnet sein, beispielsweise einer im Kraftfahrzeug installierten Standheizung.

Zur Erfindung gehört außerdem ein Ladesystem mit einem Kraftfahrzeug und einer fahrzeugexternen Ladevorrichtung, die zum Laden des elektrischen Energiespeichers mit diesem gekoppelt ist. Die Ladevorrichtung kann als Ladesäule einer Stromtankstelle ausgeführt sein. Dabei kann die Ladevorrichtung beispielsweise einen Gleichstrom bereitstellen, welcher beispielsweise über ein Ladekabel, welches mit der Ladeschnittstelle über eine Steckverbindung verbunden ist, in das Kraftfahrzeug eingespeist wird.

Es kann aber auch vorgesehen sein, dass die Ladevorrichtung eine haushaltsübliche Steckdose ist, welche mit einem Wechselstromnetz verbunden ist und einen Wechselstrom bereitstellt. Dieser Wechselstrom kann dem Kraftfahrzeug über die Ladeschnittstelle zugeführt werden und fahrzeugintern mittels eines Gleichrichters zum Laden des elektrischen Energiespeichers gleichgerichtet werden. Das Ladeverfahren ist also hier ein Wechselstromladen. Alternativ kann die Ladevorrichtung auch als Primärspule ausgeführt sein und die Ladeschnittstelle als Sekundärspule ausgeführt sein, wobei die Energie von der Ladevorrichtung induktiv an die Ladeschnittstelle übertragen wird. Das Ladeverfahren ist also hier ein induktives Laden.

Weitere Vorteile und Ausgestaltungen der Erfindung ergeben sich aus der Beschreibung und den Beispielen. Die Erfindung ist im Folgenden anhand beispielhafter Ausführungsformen nachfolgend weiter beschrieben.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer beispielhaften Ausführung hat der elektrische Energiespeicher eines Kraftfahrzeugs eine Nennspannung von 400 V. Der Energiespeicher weist zwei gleiche Teilenergiespeicher (Blöcke) auf, die über Schalteinrichtungen zu einer Parallelschaltung oder zu einer Serienschaltung elektrisch verbindbar sind. Eine Steuereinrichtung steuert die Schalteinrichtungen an, um die Teilenergiespeicher parallel oder in Reihe zu schalten. Im Betriebsmodus des Kraftfahrzeugs sind die Teilenergiespeicher über die Schalteinrichtungen parallel geschaltet.

Das folgende Rechenbeispiel stellt die Verkürzung der Ladedauer eines Ladevorgangs dar, welche über eine externe Energiequelle (Ladesäule) mit einer im Bereich von 0 V bis 1.000 V einstellbaren Netzspannung und einer maximalen Ladestromstärke von 350 A geladen wird.

Bei einer Ladespannung von 400 V und einem Ladestrom von 350 A dauere der Ladevorgang der Energiespeichereinheit mit parallel geschalteten Blöcken ca. 4 h. Die Ladeleistung der externen Energiequelle beträgt dabei 400 V x 350 A = 140 kW.

Erfindungsgemäß werden die Blöcke während des Ladebetriebs über die Schalteinrichtungen zu einer Serienschaltung verbunden. Bei zwei jeweils als Batterien mit 400 V Nennspannung ausgestalteten Teilenergiespeichern ergibt sich in der Serienschaltung ein Energiespeicher mit 800 V Nennspannung.

Durch die Reihenschaltung der Blöcke kann der Energiespeicher nun mit einer Ladespannung von 800 V geladen werden. Dadurch verkürzt sich die Ladezeit des Energiespeichers auf nur ca. 2 h. Die Zeitersparnis kommt dadurch zu Stande, dass eine höhere Ladeleistung der Ladesäule abgerufen werden kann, nämlich 800 V x 350 A = 280 kW.

Durch die Reihenschaltung der beiden Teilenergiespeicher während des Ladevorgangs, also durch die temporäre Verdoppelung der Nennspannung des Energiespeichers, kann von der Ladevorrichtung bei vorgegebenem Ladestrom eine doppelt so hohe Ladeleistung abgerufen werden wie bei der Parallelschaltung der Teilenergiespeicher.

Nach Beendigung des Ladevorgangs werden die Teilenergiespeicher über die Schalteinrichtung wieder parallel geschaltet.

In einer anderen beispielhaften Ausführung hat der elektrische Energiespeicher eines Kraftfahrzeugs eine Nennspannung von 300 V und weist drei gleiche Blöcke auf, die über Schalteinrichtungen zu einer Parallelschaltung oder zu einer Serienschaltung elektrisch verbindbar sind.

Der Energiespeicher wird an einer Ladesäule mit einer Ladespannung, die im Bereich von 0 V bis 1.000 V einstellbar ist, und einer nur durch die Stromtragfähigkeit der Ladeleitung der Ladesäule bzw. des Ladesteckers begrenzten maximalen Ladestromstärke von 350 A geladen.

Bei einer Parallelschaltung der Blöcke kann maximal eine Ladeleistung von 300 V x 350 A = 105 kW genutzt werden. Sind die Blöcke während des Ladevorgangs dagegen in Reihe geschaltet, kann eine Ladeleistung von bis zu 900 V x 350 A = 315 kW genutzt werden, wodurch sich die Ladezeit auf etwa ein Drittel verkürzt.

## Patentansprüche

1. Verfahren zum Laden mindestens eines elektrischen Energiespeichers eines Kraftfahrzeugs, worin der Energiespeicher für die Dauer des Ladevorgangs in mindestens zwei gleiche Teilenergiespeicher aufgeteilt und diese in Reihe geschaltet werden.

2. Verfahren nach Anspruch 1, bei dem der mindestens eine elektrische Energiespeicher in n gleiche Teilenergiespeicher aufgeteilt wird, wobei n eine ganze Zahl größer 2 ist.

3. Verfahren nach Anspruch 1 oder 2, worin der mindestens eine elektrische Energiespeicher mindestens eine Traktionsbatterie eines Elektrofahrzeugs oder eines Hybridfahrzeugs umfasst.

4. Verfahren nach einem der Ansprüche 1 bis 3, worin der mindestens eine elektrische Energiespeicher eine Anzahl von Zellen oder Zellmodulen umfasst, die in wenigstens zwei, jeweils mindestens eine elektrische Zelle oder ein Zellmodul umfassende Teilenergiespeicher unterteilbar oder unterteilt ist, und worin die Teilenergiespeicher wahlweise parallel oder in Reihe geschaltet werden können.

5. Verfahren nach einem der Ansprüche 1 bis 4, worin der mindestens eine Energiespeicher in Abhängigkeit von einer für den Ladevorgang zur Verfügung stehenden Ladespannung in Teilenergiespeicher aufgeteilt wird.

6. Verfahren nach Anspruch 5, bei dem die Summe der Nennspannungen der Teilenergiespeicher kleiner oder gleich der Ladespannung ist.

7. Energiesystem für ein Kraftfahrzeig, umfassend mindestens einen elektrischen Energiespeicher, der dafür eingerichtet ist, reversibel in mindestens zwei in Reihe geschaltete gleiche Teilenergiespeicher aufgeteilt zu werden, und eine mit dem mindestens einen Energiespeicher verbundene Ladeschnittstelle zum Aufladen des mindestens einen Energiespeichers mittels einer elektrische Energie bereitstellenden externen Energiequelle.

8. Energiesystem nach Anspruch 7, worin dem mindestens einen elektrischen Energiespeicher eine Steuereinrichtung zugeordnet ist, die zur Unterteilung des mindestens einen elektrischen Energiespeichers in Teilenergiespeicher und zur wahlweise parallelen oder seriellen Verschaltung der Teilenergiespeicher eingerichtet ist.

9. Energiesystem nach Anspruch 8, worin die Steuereinrichtung mit einer Kommunikationseinrichtung verbunden ist, die dafür eingerichtet ist, mit einer externen Energiequelle zu kommunizieren und einen Ladevorgang zu koordinieren.

10. Energiesystem nach Anspruch 8 oder 9, das eine mit der Steuereinrichtung kommunizierende Erfassungseinrichtung aufweist, die zur Erfassung einer Verbindung der Ladeschnittstelle mit einer externen Energiequelle und gegebenenfalls zur Erfassung der Netzkapazität der externen Energiequelle eingerichtet ist.
